# EUROPÄISCHE PATENTSCHRIFT

(11) **EP 2 540 544 B1**
(45) Veröffentlichungstag und Bekanntmachung des Hinweises auf die Patenterteilung: **26.02.2014**
(21) Anmeldenummer: 11171635.3
(22) Anmeldetag: 28.06.2011
(51) Int. Cl.: B60L 11/12, B60W 10/08, B60W 20/00, H02P 29/02, B60K 6/46

(54) **Drehmomentüberwachung bei Fahrzeugen**
Torque monitoring for vehicles
Surveillance de couple de véhicules

(43) Veröffentlichungstag der Anmeldung: 02.01.2013
(73) Patentinhaber: Siemens Aktiengesellschaft, 80333 München (DE)
(72) Erfinder: Köpken, Hans-Georg, 91056 Erlangen (DE)

(56) Entgegenhaltungen:
- DE-A1-102005 049 070
- DE-A1-102009 046 583
- US-B1- 6 806 667

## Beschreibung

Die vorliegende Erfindung betrifft ein Fahrzeug mit mindestens einem Rad, einem Elektromotor zum Antrieb des mindestens einen Rads, einem Drehgeber zum Erfassen einer Motordrehzahl des Elektromotors, einer Leistungsmesseinrichtung zum Messen einer ersten elektrischen Leistung, die zum Betrieb des Elektromotors bereitgestellt wird, und einem Drehmomentmonitor, mit dem aus der ersten elektrischen Leistung und der Motordrehzahl ein erstes Drehmoment ermittelt wird. Darüber hinaus betrifft die vorliegende Erfindung ein Verfahren zum Überwachen des Drehmoments eines Antriebs eines derartigen Fahrzeugs.

Elektrisch betriebene Fahrzeuge, seien es reine Elektroautos oder Hybridfahrzeuge, besitzen einen Elektroantrieb, der ein gewisses Drehmoment liefert. Dieses Drehmoment kann je nach Bedarf vom Fahrer gesteuert werden.

Wenn das Drehmoment des Elektroantriebs eines Fahrzeugs zu stark von einem Sollwert abweicht, kann dies zu einer Gefährdung der Fahrzeuginsassen führen. Wenn beispielsweise das Drehmoment beim Starten des Fahrzeugs zu groß ist, kommt es zu einem unerwünschten Anfahren des Fahrzeugs. Ein anderes Beispiel wäre, wenn der Elektroantrieb entsprechend einem "klemmenden Gaspedal" beschleunigt, wenn dies nicht erwünscht ist. Als weiteres Beispiel für zu hohes Drehmoment kann der Fall angeführt werden, dass in einer Kurve ein Fahrerassistenzsystem nur einen bestimmten maximalen Drehmomentbetrag zulässt, dieser jedoch tatsächlich überschritten wird, und das Fahrzeug ins Schleudern gerät.

Aus all den oben genannten Gründen ist es notwendig, das Drehmoment eines Elektroantriebs eines Fahrzeugs zu überwachen. Die Überwachung kann auf der Basis der elektrischen Leistung erfolgen, die der Summe aus Verlustleistung und mechanischer Leistung entspricht. Um von der Leistung P auf das Drehmoment M zu schließen, wird entsprechend der Formel M = P / ω = P / (nr • 2n) außerdem die Motordrehzahl nr benötigt.

Für die Sicherheit der Fahrzeuginsassen ist es von Vorteil, wenn die Überwachung durch redundante Systeme erfolgt. Damit kann die Wahrscheinlichkeit einer fehlerhaften Überwachung weiter reduziert werden.

Die elektrische Leistung wird aus Strom und Spannung bestimmt. Oft sind ohnehin mehrere Strom- und Spannungssensoren im Fahrzeug vorhanden, so dass hier eine Redundanz ohne zusätzliche Sensoren möglich ist. Typischerweise gibt es aber nur einen Rotor- bzw. Drehgeber am Rotor des Elektromotors. Es fehlt also ein redundanter Drehzahlsensor. Um den zu umgehen, gibt es Ansätze, elektrische Fehler durch redundante Signale aus dem Rotorgeber aufzudecken. Es bleibt jedoch ein gegenüber redundanten Gebern erhöhtes Risiko, und es entsteht ein Zusatzaufwand in der Auswerteelektronik.

Aus der Druckschrift DE 10 2009 046 583 A1 ist ein Verfahren zum Plausibilisieren des Drehmoments einer elektrischen Maschine bekannt. Dabei wird aus einem anhand eines Maschinenmodells berechneten Drehmoments und einer Drehzahl der elektrischen Maschine ein erster Wert einer elektromagnetischen Leistung der elektrischen Maschine bestimmt. Aus den Statorströmen und den Statorstrangspannungen werden Statorstromkomponenten und daraus ein zweiter Wert der elektromagnetischen Leistung der elektrischen Maschine bestimmt. Bei Abweichung beider Leistungen wird das anhand des Maschinenmodells berechnete Drehmoment als unplausibel eingestuft.

Die Aufgabe der vorliegenden Erfindung besteht darin, ohne großen Aufwand das Drehmoment eines Elektroantriebs eines Fahrzeugs redundant überwachen zu können. Es soll ein entsprechendes Fahrzeug und ein entsprechendes Verfahren bereitgestellt werden.

Erfindungsgemäß wird diese Aufgabe gelöst durch ein Fahrzeug nach Anspruch 1.

Darüber hinaus wird erfindungsgemäß bereitgestellt ein Verfahren nach Anspruch 9.

In vorteilhafter Weise wird also zur redundanten Überwachung des Drehmoments neben der Drehzahl des Elektromotors auch eine Drehzahl eines Rads des Fahrzeugs mit einem Radsensor gemessen. Derartige Radsensoren sind in einem Fahrzeug, welches beispielsweise ein Antiblockiersystem aufweist, in der Regel ohnehin verbaut. Es kann also auf vorhandene Sensorik zurückgegriffen werden, sodass letztlich für die redundante Überwachung zusätzlicher Kosten- und Platzbedarf vermieden werden kann.

Vorzugsweise ist der Elektromotor ein Dreiphasenmotor, und durch die Leistungsmesseinrichtung wird die erste Leistung an einem dreiphasigen Anschluss des Elektromotors ermittelt. Damit lässt sich die erfindungsgemäße redundante Drehmomentüberwachung auch bei üblichen Drehstromantrieben realisieren.

Der Elektromotor kann von einer Gleichspannungsbatterie über einen Wechselrichter gespeist sein, und von der Leistungsmesseinrichtung wird dann die zweite elektrische Leistung am Ausgang der Gleichspannungsbatterie gemessen. Wird die erste Leistung nach dem Wechselrichter gemessen, so kann über die Differenz zwischen der ersten Leistung und der zweiten Leistung auch die Verlustleistung des Wechselrichters überwacht werden.

Wenn das Fahrzeug zwei Räder aufweist, deren Raddrehzahlen von jeweiligen Radsensoren erfasst werden, und die Räder über ein Getriebe miteinander verbunden sind, kann als Drehzahl für die Ermittlung des zweiten Drehmoments der Mittelwert der Drehzahlen der Räder von dem Drehmomentmonitor verwendet werden. Auf diese Weise lässt sich auch bei Fahrzeugen mit Differenzialgetriebe die redundante Drehmomentüberwachung einfach realisieren.

Ferner kann das Fahrzeug ein Getriebe zwischen dem Elektromotor und dem Rad bzw. den Rädern besitzen, und bei der Ermittlung des zweiten Drehmoments durch den Drehmomentmonitor wird dann eine Übersetzungszahl des Getriebes berücksichtigt. Die Übersetzungszahl bei Elektroantrieben ist in der Regel fest, sodass die Berechnung des zweiten Drehmoments entsprechend einfach gestaltet werden kann.

Günstigerweise wird das erste und zweite Drehmoment in dem Drehmomentmonitor durch Division eines Leistungswerts durch einen Drehzahlwert ermittelt. Durch den analytischen Zusammenhang dieser Größen ist es nicht notwendig, ein entsprechendes Kennlinienfeld in dem Drehmomentmonitor abzulegen. Für Drehzahlen unter einem vorgegebenen Wert ist es aufgrund der möglichen Division durch 0 dann notwendig, entweder die Drehmomentüberwachung zu unterbrechen bzw. nicht durchführen zu lassen, oder sie anders zu bewerkstelligen. Dies kann dann beispielsweise durch ein Kennlinienfeld realisiert werden. Diese Problematik der Division durch 0 tritt natürlich nicht auf, wenn das erste und zweite Drehmoment in dem Drehmomentmonitor durch ein Kennlinienfeld in Abhängigkeit von einem Leistungswert und einem Drehzahlwert ermittelt werden.

Die von dem Drehmomentmonitor ermittelten Drehmomente sollten einer Tiefpassfilterung unterzogen werden. Dies hat den Vorteil, dass damit Energiespeichereffekte des Motors berücksichtigt werden können, die bei der Drehmomentberechnung als Spitzen auftreten, so aber nicht der Realität entsprechen.

Die vorliegende Erfindung wird nun anhand der beigefügten Zeichnungen näher erläutert, in denen zeigen:
- FIG 1: eine Prinzipskizze eines Fahrzeugs mit Elektroantrieb und
- FIG 2: ein Blockschaltdiagramm eines Drehmomentmonitors.

Die nachfolgend näher geschilderten Ausführungsbeispiele stellen bevorzugte Ausführungsformen der vorliegenden Erfindung dar.

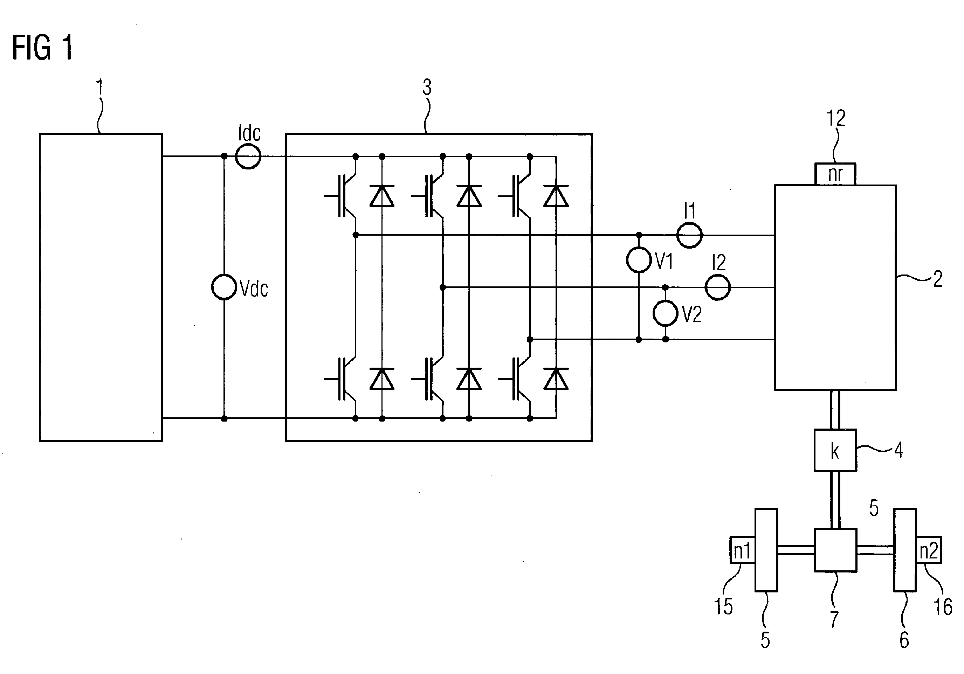

Ein Elektrofahrzeug oder ein Hybridfahrzeug besitzt beispielsweise den in FIG 1 schematisch wiedergegebenen Elektroantrieb. Demnach ist eine Hochvolt-Batterie 1 vorgesehen, die eine Gleichspannung Vdc liefert. Im Betriebsfall liefert sie einen Gleichstrom Idc.

Als elektromechanischer Wandler des Elektroantriebs dient ein dreiphasiger Elektromotor 2. Dieser Elektromotor 2 ist durch einen dreiphasigen Strom zu versorgen. Um aus dem Gleichstrom der Hochvoltbatterie 1 einen dreiphasigen Strom zu gewinnen, ist in üblicher Weise ein Wechselrichter 3 vorgesehen. Der Wechselrichter 3 besitzt einen üblichen Aufbau und eine übliche Funktion. Der dreiphasige Ausgang des Wechselrichters 3 ist direkt an den Elektromotor 2 angeschlossen.

Der Elektromotor 2 treibt mechanisch über ein Getriebe 4 ein Radpaar an. Das Getriebe besitzt eine Getriebeübersetzungszahl k. Bei derartigen Elektroantrieben ist die Übersetzungszahl k in der Regel fest.

Das Radpaar umfasst die Räder 5 und 6 und ein dazwischen geschaltetes Differenzialgetriebe 7. Die Getriebe 4 und 7 sind jedoch rein optional. Ebenso ist es nicht notwendig, dass das Fahrzeug genau zwei angetriebene Räder besitzt. Vielmehr können auch nur ein Rad oder beispielsweise vier Räder, bei Lastkraftwägen auch mehr Räder angetrieben sein.

Darüber hinaus ist es für die Erfindung nicht notwendig, dass ein dreiphasiger Motor 2 eingesetzt wird. Es kann sich auch um einen einphasigen Wechselstrommotor oder dergleichen handeln. Darüber hinaus kann anstelle eines Wechselstrommotors auch ein Gleichstrommotor verwendet werden. In diesem Fall wird der Wechselrichter 3 durch einen Gleichstromsteller ersetzt.

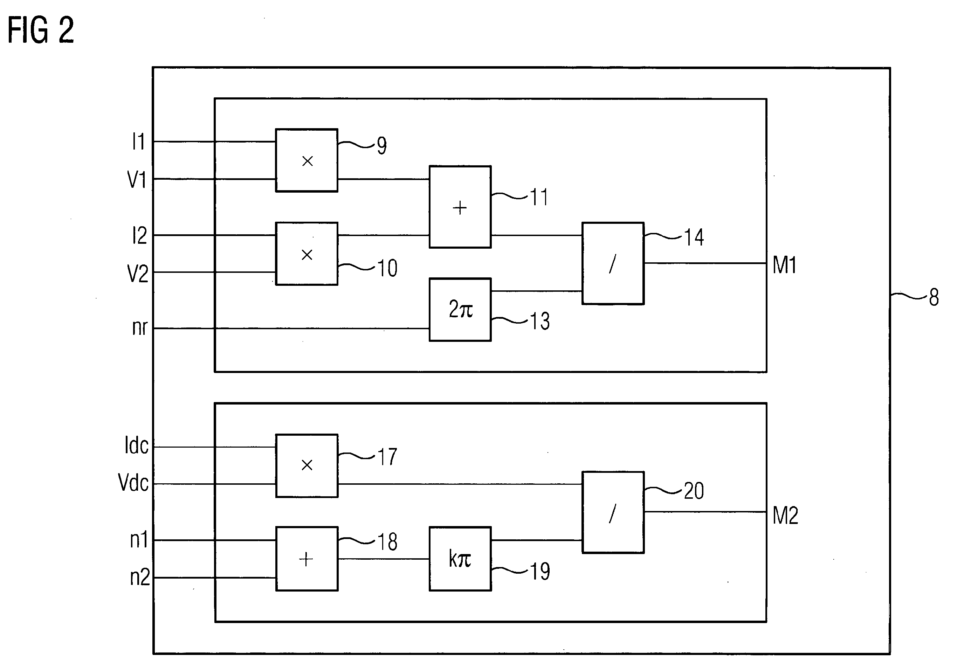

In dem Beispiel von FIG 1 wird zur Berechnung des Drehmoments die elektrische Leistung am Ausgang des Wechselrichters 3 gemessen bzw. ermittelt. Hierzu wird in einer ersten Phase der Strom I1 gemessen. Außerdem wird eine Spannung V1 von der ersten Phase zu einer dritten Phase, die als Bezugsphase dient, gemessen. Des Weiteren wird ein Strom 12 in der zweiten Phase sowie eine zweite Spannung V2 zwischen der zweiten Phase und der dritten Phase (Bezugsphase) gemessen. Aus diesen vier elektrischen Größen I1, 12, V1 und V2 kann die elektrische Leistung der dreiphasigen Versorgung wie folgt bestimmt werden: P = I1 · V1 + 12 · V2. Um diese Leistung zu messen ist eine entsprechende Leistungsmesseinrichtung vorzusehen. Geeignete Strommess- und Spannungsmesssensoren sind in FIG 1 durch Kreise angedeutet. Die Berechnung der Leistung erfolgt dann in einem Drehmomentmonitor 8, der in FIG 2 schematisch dargestellt ist. Die Leistungsmesseinrichtung ist hier, zumindest was die Berechnungseinheit betrifft, in den Drehmomentmonitor 8 integriert. Zur Berechnung einer ersten elektrischen Leistung weist der Drehmomentmonitor 8 einen ersten Multiplizierer 9, einen zweiten Multiplizierer 10 und einen Addierer 11 auf. Mit dem ersten Multiplizierer 9 werden die Faktoren I1 und V1 multipliziert, und mit dem zweiten Multiplizierer 10 werden die Faktoren I2 und V2 multipliziert. Die Produkte beider Multiplizierer 9, 10 werden in dem Addierer 11 summiert. Das Resultat ist die erste Leistung P1.

Mit dem Drehmomentmonitor 8 soll das erste Drehmoment M1 berechnet werden, das der Elektromotor 2 im Idealfall, d. h. bei 100 % Wirkungsgrad liefern kann. Dieses Drehmoment dient lediglich als Anhaltspunkt dafür, welches Drehmoment der Elektromotor 2 tatsächlich liefert.

Um von der ersten Leistung P1 gemäß der oben bereits dargestellten Formel das erste Moment M1 ermitteln zu können, benötigt der Drehmomentmonitor 8 als weitere Eingangsgröße die Drehzahl nr des Elektromotors 2. Diese Drehzahl nr wird durch einen geeigneten Rotor - bzw. Drehgeber 12 abgegriffen. Durch einen weiteren Multiplizierer 13 wird die Drehzahl nr mit dem Faktor 2n multipliziert. Die Summe des Addierers 11 wird dann durch das Produkt des Multiplizierers 13 von einem Dividierer 14 dividiert. Das Ausgangssignal des Dividierers 14 ist das erste Drehmoment M1. Dieses kann zur Überwachung des Antriebs eingesetzt werden: wenn das Drehmoment M1 zu stark vom geforderten Drehmoment abweicht, deutet dies auf einen Fehler im Antrieb hin und es kann eine Schutzreaktion ausgelöst werden. Dieses erste Drehmoment M1 gilt es nun durch ein möglichst einfaches redundantes System zu ergänzen.

In der Regel sind bei einem Elektroantrieb zwischen der Hochvoltbatterie 1 und dem Wechselrichter 3 ein Strom- und ein Spannungssensor vorgesehen, die die Gleichspannung Vdc und den Gleichstrom Idc der Hochvoltbatterie 1 abgreifen. Ebenso verfügt ein Fahrzeug gängigerweise über ein Antiblockiersystem, sodass an den Rädern 5, 6 entsprechende Radsensoren 15, 16 vorgesehen sind. Sie messen die Drehzahlen n1 und n2 der beiden Räder 5, 6.

Aus diesen Größen, die in den meisten Fahrzeugen ohnehin gemessen werden, ermittelt der Drehmomentmonitor 8 auf einem zweiten Pfad ein Drehmoment des Elektroantriebs. Der Drehmomentmonitor 8 besitzt hierzu einen weiteren Multiplizierer 17, der den Strom Idc mit der Spannung Vdc multipliziert. Ein Addierer 18 addiert die Drehzahlen n1 und n2 der beiden Räder 5 und 6. Zur Mittelwertbildung und zum Gewinnen einer mittleren Drehzahl muss die Summe durch zwei dividiert werden. Weiterhin muss die mittlere Drehzahl mit dem Faktor 2π und außerdem mit dem Getriebeübersetzungsfaktor k multipliziert werden, da zwischen das Radpaar 5, 6 und den Elektromotor 2 das Getriebe 4 geschaltet ist. Letztlich muss demnach die Summe des Addierers 18 mit dem Faktor kn multipliziert werden, was der Multiplizierer 19 ausführt. Das Produkt des Multiplizierers 17 wird nun durch das Produkt des Multiplizierers 19 mithilfe eines Dividierers 20 dividiert, sodass man das zweite Drehmoment M2 erhält.

In das zweite Drehmoment M2 gehen die elektrischen Verlusten des Wechselrichters 3 und des Elektromotors 2 ein. Die beiden von dem Drehmomentmonitor 8 ermittelten Drehmomente M1 und M2 werden also nicht genau übereinstimmen. Dennoch kann auch dieses Drehmoment M2 zur Überwachung des Antriebs genutzt werden: wenn das Drehmoment M1 zu stark vom geforderten Drehmoment abweicht, deutet dies auf einen Fehler im Antrieb hin und es kann eine Schutzreaktion ausgelöst werden.

Schließlich kann auch das eine ermittelte Drehmoment zur Überprüfung des anderen Drehmoments herangezogen werden: die Abweichung darf nicht zu groß sein, die typische und die zulässige Abweichung kann z.B. über eine Kennlinie als Funktion der Drehzahl abgelegt werden. Die Überprüfung ist äußerst aussagekräftig, da für die Übermittlung der beiden Drehmomente M1 und M2 vollkommen unabhängige Messpfade verwendet werden.

Entsprechend der erfindungsgemäßen Idee werden also die Radsensoren der angetriebenen Räder (typisch zwei Räder über ein Differenzialgetriebe am Motor) als redundante Drehzahlsensoren in die Drehmomentüberwachung einbezogen. Durch diese Nutzung der Raddrehzahlen im Drehmomentmonitor lässt sich ohne Mehrkosten für zusätzliche oder sichere Sensoren die Sicherheit des Systems verbessern.

Die oben dargestellte Berechnung des Drehmoments ist nur bei sehr kleinen Drehzahlen kritisch (Division durch 0). Bei sehr kleinen Drehzahlen kann daher vorgesehen sein, dass der Drehmomentmonitor 8 keine Drehmomentüberwachung vornimmt. Alternativ kann die Berechnung des Drehmoments aus der Leistung aber auch über ein Kennlinienfeld erfolgen, sodass eine Division durch 0 vermieden werden kann.

In derartigen Kennlinienfeldern können ggf. Verlustleistungen der Antriebskomponenten berücksichtigt werden. Insbesondere zählen hierzu die Verlustleistungen beispielsweise des Wechselrichters 3, des Elektromotors 2 und der Getriebe 4, 7. Bei der Drehzahl 0 (oder einer sehr kleinen Drehzahl) kann z.B. bei einem Synchronmotor der maximale Drehmomentbetrag dann aus der Verlustleistung geschätzt werden, da die Verluste ein Maß für den Motorstrom und dieser ein Maß für das maximal auftretende Drehmoment ist.

Beim Betrieb des Elektroantriebs können gewisse Stromspitzen auftreten, die nicht vollständig in entsprechende Momentspitzen umgesetzt werden. Dies liegt daran, dass kurzfristig in dem Elektromotor Energie gespeichert werden kann. Dadurch ist es ratsam, die aus den Strömen und Spannungen berechneten Momente einer Tiefpassfilterung zu unterziehen.

Mit der geschilderten Drehmomentüberwachung anhand der vollständig unabhängig voneinander gewonnenen Drehmomentschätzwerte M1 und M2 kann indirekt überprüft werden, ob die Hochvoltbatterie 1, die Leistungselektronik (Wechselrichter 3), die Sensoren, der Elektromotor 2 und die Getriebe 4, 7 fehlerfrei funktionieren. Ist eines dieser Komponenten fehlerbehaftet, so weichen die beiden Drehmomentschätzwerte M1 und M2 entsprechend vom Drehmomentsollwert oder auch voneinander ab.

## Patentansprüche

1. Fahrzeug mit
- mindestens einem Rad (5,6),
- einem Elektromotor (2) zum Antrieb des mindestens einen Rads,
- einem Drehgeber (12) zum Erfassen einer Motordrehzahl (nr) des Elektromotors (2),
- einer Leistungsmesseinrichtung zum Messen einer ersten elektrischen Leistung, die zum Betrieb des Elektromotors (2) bereitgestellt wird, wobei
- durch die Leistungsmesseinrichtung die erste Leistung an einem Anschluss des Elektromotors (2) ermittelbar ist, und
- einem Drehmomentmonitor (8), mit dem aus der ersten elektrischen Leistung und der Motordrehzahl (nr) ein erstes Drehmoment (M1) ermittelbar ist, wobei
- an dem mindestens einen Rad (5,6) ein Radsensor (15,16) angeordnet ist, mit dem eine Raddrehzahl (n1,n2) des Rads erfassbar ist, und
- die Leistungsmesseinrichtung zum Messen einer von der ersten elektrischen Leistung abhängigen zweiten elektrischen Leistung ausgebildet ist,
**dadurch gekennzeichnet , dass**
- durch den Drehmomentmonitor (8) ein zweites Drehmoment (M2) zur Überwachung des ersten Drehmoments (M1) aus der Raddrehzahl (n1, n2) und der zweiten elektrischen Leistung ermittelbar ist,
- der Elektromotor (2) von einer Gleichspannungsbatterie (1) gespeist ist, und von der Leistungsmesseinrichtung die zweite elektrische Leistung am Ausgang der Gleichspannungsbatterie (1) messbar ist und
- das Fahrzeug ein Getriebe (4) zwischen dem Elektromotor (2) und dem Rad bzw. den Rädern aufweist, und eine Übersetzungszahl (k) des Getriebes (4) bei der Ermittlung des zweiten Drehmoments (M2) durch den Drehmonitor (8) berücksichtigt wird.

2. Fahrzeug nach Anspruch 1, wobei der Elektromotor (2) ein Dreiphasenmotor ist, und der Anschluss ein dreiphasiger Anschluss ist.

3. Fahrzeug nach Anspruch 1 oder 2, wobei der Elektromotor über einen Wechselrichter (3) gespeist ist.

4. Fahrzeug nach einem der vorhergehenden Ansprüche, das zwei Räder (5,6) aufweist, deren Raddrehzahlen (n1,n2) von jeweiligen Radsensoren (15,16) erfasst werden und die über ein Getriebe (7) miteinander verbunden sind, und wobei als Drehzahl für die Ermittlung des zweiten Drehmoments (M2) der Mittelwert der Drehzahlen (n1,n2) der Räder (5,6) von dem Drehmomentmonitor (8) verwendet wird.

5. Fahrzeug nach einem der vorhergehenden Ansprüche, wobei das erste und zweite Drehmoment (M1, M2) in dem Drehmomentmonitor (8) durch Division eines Leistungswerts durch einen Drehzahlwert ermittelt wird.

6. Fahrzeug nach Anspruch 5, wobei für Drehzahlen unter einem vorgegebenen Wert von dem Drehmomentmonitor (8) keine Drehmomente ermittelt werden.

7. Fahrzeug nach einem der Ansprüche 1 bis 4, wobei das erste und zweite Drehmoment (M1,M2) in dem Drehmomentmonitor (8) durch ein Kennlinienfeld in Abhängigkeit von einem Leistungswert und einem Drehzahlwert ermittelt werden.

8. Fahrzeug nach einem der vorhergehenden Ansprüche, wobei die von dem Drehmomentmonitor (8) ermittelten Drehmomente in dem Drehmomentmonitor einer Tiefpassfilterung unterzogen werden.

9. Verfahren zur Überwachung des Drehmoments eines Antriebs eines Fahrzeugs mit mindestens einem Rad (5,6) und einem Elektromotor (2) zum Antrieb des mindestens einen Rads, durch
- Erfassen einer Motordrehzahl (nr) des Elektromotors (2),
- Messen einer ersten elektrischen Leistung, die zum Betrieb des Elektromotors (2) bereitgestellt wird, wobei
- die erste Leistung an einem Anschluss des Elektromotors ermittelt wird, und
- Ermitteln eines ersten Drehmoments (M1) aus der ersten elektrischen Leistung und der Motordrehzahl (nr), wobei
- von dem mindestens einen Rad (5,6) eine Raddrehzahl (n1, n2) erfasst wird,
- eine von der ersten elektrischen Leistung abhängige zweite elektrische Leistung gemessen wird, und
**dadurch gekennzeichnet, dass**
- ein zweites Drehmoment (M2) zur Überwachung des ersten Drehmoments (M1) aus der Raddrehzahl (nr) und der zweiten elektrischen Leistung ermittelt wird,
- der Elektromotor von einer Gleichspannungsbatterie gespeist wird, und die zweite Leistung am Ausgang der Gleichspannungsbatterie gemessen wird und
- eine Übersetzungszahl (k) eines Getriebes zwischen dem Elektromotor und dem Rad bzw. den Rädern bei der Ermittlung des zweiten Drehmoments berücksichtigt wird.

## Claims

1. Motor vehicle having
- at least one wheel (5, 6),
- an electric motor (2) for driving the at least one wheel,
- a rotary sensor (12) for acquiring a motor rotation speed (nr) of the electric motor (2),
- a performance measuring facility for measuring a first electrical performance, which is provided for operation of the electric motor (2), wherein the first performance can be determined by the performance measuring facility at a connection of the electric motor (2) and
- a torque monitor (8), with which a first torque (M1) can be determined from the first electrical performance and the motor rotation speed (nr), wherein
- a wheel sensor (15, 16) is arranged on the at least one wheel (5, 6), with which a wheel speed (n1, n2) of the wheel can be ascertained, and
- the performance measuring facility is embodied to measure a second electrical performance as a function of the first electrical performance,
**characterised in that**
- a second torque (M2) can be determined by the torque monitor (8) from the wheel speed (n1, n2) and the second electrical performance for monitoring the first torque (M1)
- the electric motor (2) is fed by a DC battery (1) and the second electrical performance can be measured by the performance measuring facility at the output of the DC battery (1) and
- the vehicle has a gear transmission (4) between the electric motor (2) and the wheel or wheels, and a transmission ratio rate (k) of the gear transmission (4) is taken into account by the rotary monitor (8) when determining the second torque (M2).

2. Motor vehicle according to claim 1, wherein the electric motor (2) is a three-phase motor, and the connection is a three-phase connection.

3. Motor vehicle according to claim 1 or 2, wherein the electric motor is fed by way of an inverter (3).

4. Motor vehicle according to one of the preceding claims, which has two wheels (5, 6), the wheel speeds (n1, n2) of which are acquired by respective wheel sensors (15, 16) and which are connected to one another by way of a gear transmission (7), and wherein the average value of the speeds (n1, n2) of the wheels (5, 6) is used by the torque monitor (8) as a speed to determine the second torque (M2).

5. Motor vehicle according to one of the preceding claims, wherein the first and second torque (M1, M2) is determined in the torque monitor (8) by dividing a performance value by a speed value.

6. Motor vehicle according to claim 5, wherein no torques are determined by the torque monitor (8) for speeds below a predetermined value.

7. Motor vehicle according to one of claims 1 to 4, wherein the first and second torque (M1, M2) are determined in the torque monitor (8) by a set of characteristic curves as a function of a performance value and a speed value.

8. Motor vehicle according to one of the preceding claims, wherein the torques determined by the torque monitor (8) are subjected to a low pass filtering in the torque monitor.

9. Method for monitoring the torque of a drive of a motor vehicle having at least one wheel (5, 6) and an electric motor (2) for driving the at least one wheel, by
- acquiring a motor rotation speed (nr) of the electric motor (2),
- measuring a first electric performance, which is provided for operation of the electric motor (2), wherein the first performance is determined at a connection of the electric motor, and
- determining a first torque (M1) from the first electrical performance and the motor rotation speed (nr), wherein
- a wheel speed (N1, N2) is acquired from the at least one wheel (5, 6),
- a second electrical performance dependent on the first electrical performance is measured, and
**characterised in that**
- a second torque (M2) for monitoring the first torque (M1) is determined from the wheel speed (nr) and the second electrical performance,
- the electric motor is fed by a DC battery and the second performance is measured at the output of the DC battery and
- a transmission ratio (k) of a gear transmission is taken into account between the electric motor and the wheel and/or wheels when determining the second torque.

## Revendications

1. Véhicule comprenant
- au moins une roue ( 5, 6 ),
- un moteur ( 2 ) électrique pour l'entraînement de la au moins une roue,
- un indicateur ( 12 ) de rotation pour détecter une vitesse ( nr ) de rotation du moteur ( 2 ) électrique,
- un dispositif de mesure de puissance pour la mesure d'une première puissance électrique, qui est mise à disposition pour faire fonctionner le moteur ( 2 ) électrique, dans lequel la première puissance peut être déterminée par le dispositif de mesure de puissance sur une borne du moteur ( 2 ) électrique et
- un contrôleur ( 8 ) de couple de rotation, par lequel on peut déterminer un premier couple ( M1 ) de rotation, à partir de la première puissance électrique et de la vitesse ( nr ) de rotation du moteur, dans lequel
- il est disposé sur au moins une roue ( 5, 6 ) un capteur ( 15, 16 ) de roue, par lequel une vitesse ( n1, n2 ) de rotation de la roue peut être détectée et
- le dispositif de mesure de puissance est constitué pour la mesure d'une deuxième puissance électrique qui dépend de la première puissance électrique,
**caractérisé en ce que**
- un deuxième couple ( M2 ) de rotation pour le contrôle du premier couple ( M1 ) de rotation peut être déterminé par le contrôleur ( 8 ) de couple de rotation, à partir de la vitesse ( n1, n2 ) de rotation de la roue et de la deuxième puissance électrique,
- le moteur ( 2 ) électrique est alimenté par une batterie ( 1 ) de tension continue et la deuxième puissance électrique peut être mesurée par le dispositif de mesure de puissance à la sortie de la batterie ( 1 ) de tension continue et
- le véhicule a une transmission ( 4 ) entre le moteur ( 2 ) électrique et la roue ou les roues et une démultiplication ( k ) de la transmission ( 4 ) est prise en compte par le contrôleur ( 8 ) de rotation lors de la détermination du deuxième couple ( M2 ) de rotation.

2. Véhicule suivant la revendication 1, dans lequel le moteur ( 2 ) électrique est un moteur triphasé et la borne est une borne triphasée.

3. Véhicule suivant la revendication 1 ou 2, dans lequel le moteur électrique est alimenté par un onduleur ( 3 ).

4. Véhicule suivant l'une des revendications précédentes, qui a deux roues ( 5, 6 ) dont les vitesses ( n1, n2 ) de rotation des roues sont détectées par des capteurs ( 15, 16 ) de roue respectifs et qui sont reliées entre elles par une transmission ( 7 ) et dans lequel il est utilisé, par le contrôleur ( 8 ) de couple de rotation, comme vitesse de rotation pour la détermination du deuxième couple ( M2 ) de rotation, la valeur moyenne des vitesses ( n1, n2 ) de rotation des roues ( 5, 6 ).

5. Véhicule suivant l'une des revendications précédentes, dans lequel le premier et le deuxième couples ( M1, M2 ) de rotation sont déterminés dans le contrôleur ( 8 ) de couple de rotation, en divisant une valeur de puissance par une valeur de vitesse de rotation.

6. Véhicule suivant la revendication 5, dans lequel il n'est pas déterminé de couple de rotation par le contrôleur ( 8 ) de couple de rotation pour des vitesses de rotation inférieures à une valeur donnée à l'avance.

7. Véhicule suivant l'une des revendications 1 à 4, dans lequel le premier et le deuxième couples ( M1, M2 ) de rotation sont déterminés dans le contrôleur ( 8 ) de couple de rotation par une famille de courbes caractéristiques, en fonction d'une valeur de puissance et d'une valeur de vitesse de rotation.

8. Véhicule suivant l'une des revendications précédentes, dans lequel les couples de rotation déterminés par le contrôleur ( 8 ) de couple de rotation sont soumis à un filtrage passe bas dans le contrôleur de couple de rotation.

9. Procédé de contrôle du couple de rotation d'un entraînement d'un véhicule ayant au moins une roue ( 5, 6 ) et un moteur ( 2 ) électrique pour l'entraînement de la au moins une roue, par
- détection d'une vitesse ( nr ) de rotation du moteur ( 2 ) électrique,
- mesure d'une première puissance électrique qui est mise à disposition pour faire fonctionner le moteur ( 2 ) électrique, dans lequel la première puissance est déterminée sur une borne du moteur électrique et
- détermination d'un premier couple ( M1 ) de rotation, à partir de la première puissance électrique et de la vitesse ( nr ) de rotation du moteur, dans lequel
- une vitesse ( n1, n2 ) de rotation de la roue est détectée par la au moins une roue ( 5, 6 ),
- une deuxième puissance électrique qui dépend de la première puissance électrique est mesurée et
**caractérisé en ce que**
- un deuxième couple ( M2 ) de rotation, pour le contrôle du premier couple ( M1 ) de rotation, est déterminé à partir de la vitesse ( nr ) de rotation de la roue et de la deuxième puissance électrique,
- le moteur électrique est alimenté par une batterie de tension continue et la deuxième puissance est mesurée à la sortie de la batterie de tension continue et
- une démultiplication ( k ) d'une transmission, entre le moteur électrique et la roue ou les roues, est prise en compte lors de la détermination du deuxième couple de rotation.
